# EUROPEAN PATENT SPECIFICATION

(11) **EP 2 507 881 B1**
(45) Date of publication and mention of the grant of the patent: **16.08.2017**
(21) Application number: 10809032.5
(22) Date of filing: 23.11.2010
(51) Int. Cl.: H02G 5/00

(54) **BUSBAR JOINT**
STROMSCHIENENVERBINDUNG
CONNECTEUR POUR BARRES OMNIBUS

(30) Priority: 02.12.2009 IT MI20092135
(43) Date of publication of application: 10.10.2012
(73) Proprietor: BTICINO S.P.A., 21100 Varese, (IT)
(72) Inventor: PASSERA, Costantino, I-25136 Brescia (BS) (IT)
(74) Representative: Bonvicini, Davide
(86) International application number: PCT/IB2010/002987
(87) International publication number: WO 2011/067647

(56) References cited:
- CA-A1- 2 087 764
- US-A- 2 274 422
- US-A- 3 189 680
- US-B1- 6 176 720

## Description

The present invention relates to a busbar power distribution device.

Busbar power distribution devices are known in the art and disclosed, for instance, in EP 815 626 and WO 03/069747.

Devices of the above mentioned type are employed for carrying and distributing high power, particularly in service and industrial buildings.

According to the above mentioned prior art, a busbar power distribution device comprises two busbar ducts, each having a plurality of mutually insulated conductors and a joint for connecting the conductors of the two busbar ducts. The joint comprises a plurality of pairs of conductor plates separated by insulator plates.

Each pair of conductor plates is composed of two opposed conductor plates which define a seat for receiving the end portions of the conductors of the two busbar ducts. The joint also comprises a nut-and-screw clamping member, in which the bolt extends through the pairs of conductor plates and insulator plates and holds them together. When the screw is loosened, the end portions of the conductors of the busbar ducts may be inserted into their respective seats of the conductor plates, whereas tightening of the screw in the nut causes the pairs of conductor plates to be clamped on the end portions of the conductors of the busbar ducts.

In industrial plants, the need is known of laying ducts of different lengths according to the particular connection to be made. Nevertheless, the manufacture of ducts of custom lengths causes an excessive cost increase for the final customer, as well as a considerable manufacturing complexity for the supplier.

A viable alternative to custom manufacture would consist in adjusting the distance between the ends of the busbar ducts inserted in the joints. Nevertheless, prior art busbar power distribution devices do not allow such adjustment, excepting to a very small distance of the order of a few mm, defined by the width of the conductor plate seats that are designed to receive the end portions of the conductors of the two busbar ducts.

One solution for adjustment of busbar power distribution devices has been provided in CA 2 087 764, which discloses a joint including a plurality of electrically conducting metal splice plates interleaved with electrically insulating separator plates to receive the adjoining ends of busbar power conductors. The joint comprises a pair of plates having side apertures for receiving a screw that electrically connects the ends of the busbar conductors with the splice plates. The conductor splice plates allow the busbar conductors to be electrically connected to a plurality of busbar distribution stabs with open slots formed at one of their ends. The slots allow adjustment of the ends of the busbar distribution stabs, while maintaining electrical connection between the busbar distribution connectors.

Another solution for adjustment of busbar power distribution devices has been provided in US 6.176.720, which discloses an electrical busbar assembly having pairs of busbar conductors used to form a joint. One embodiment uses a busbar conductor with an open slot, located between a pair of stationary busbar conductors held in a box-like element.

Nevertheless, the above solutions involve the risk that busbar conductors may become disconnected from joints as clamping screws are loosened and screws can freely slide along the open slots.

Therefore, the need is felt to prevent separation of busbar conductors from the joints while maintaining a convenient joining structure and allowing adjustment of busbar conductors.

Therefore, the object of the present invention is to provide a busbar power distribution device that has such structural and functional features as to fulfill the above needs, while obviating the drawbacks of prior art.

This object is fulfilled by a busbar power distribution device as defined in claim 1.

Further features and advantages of the busbar power distribution device of the present invention, will be apparent from the following description of one preferred embodiment thereof, which is given by way of illustration and without limitation with reference to the accompanying figures, in which:
- Figure 1 is a schematic perspective view of a busbar power distribution device of the present invention, with the busbar ducts in a proximal position,
- Figure 2 is a schematic perspective view of a busbar power distribution device of Figure 1, with the busbar ducts in a distal position,
- Figure 3 is a schematic perspective view of a busbar power distribution device of Figure 2, with a busbar duct rotated relative to the joint,
- Figure 4 is a schematic perspective view of one embodiment of busbar ducts adapted for use in the device of Figure 1,

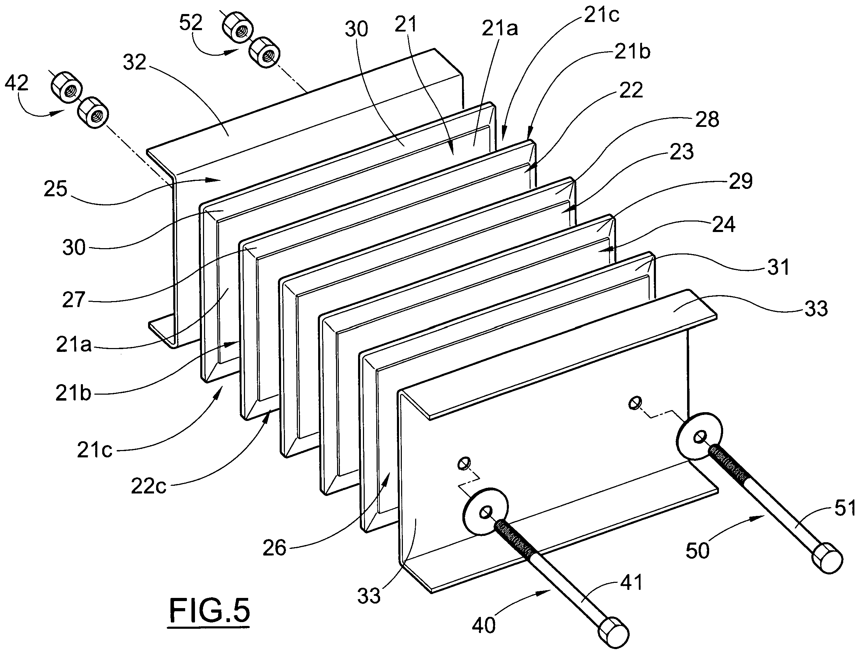

- Figure 5 is an exploded schematic perspective view of the joint of the device of Figure 1,
- Figure 6a is an exploded schematic perspective view of the joint of the device of Figure 1,
- Figure 6b is a partially sectional schematic perspective view of the device of Figure 2,
- Figure 7 is a schematic perspective view of an example of a power distribution device not belonging to the present invention, and
- Figure 8 is a schematic perspective view of an example of a busbar power distribution device not belonging to the present invention.

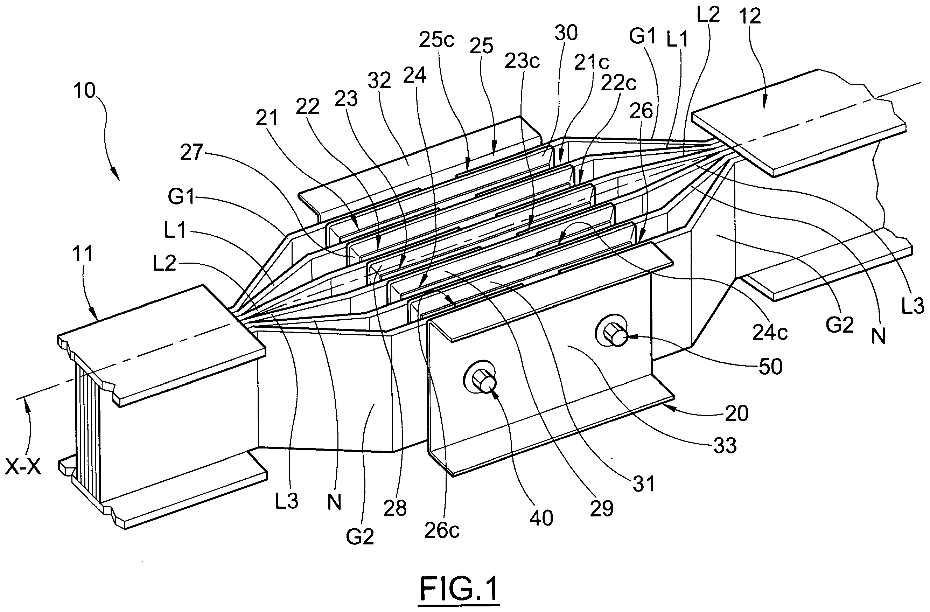

Referring to Figure 1, numeral 10 generally designates a busbar power distribution device 10.

The power distribution device 10 comprises a first busbar duct 11 having a plurality of mutually insulated busbar conductors and a second busbar duct having a plurality of mutually insulated conductors.

In one embodiment, each busbar duct comprises four busbar conductors L1, L2, L3, N, where L1, L2, L3 are the phase busbars and N is the neutral busbar. A housing (not shown) made of a conductive material is provided for protection of the conductors L1, L2, L3, N, and encloses the conductors L1, L2, L3 and N and acts as a conductor for grounding of the busbar duct.

In an alternative embodiment, as shown in the accompanying figures, two busbar conductors G 1, G2 acting as grounding busbars may be used as protection conductors.

In one embodiment, the conductors of the two busbar ducts 11 and 12 extend in a longitudinal direction X-X, are parallel through a first portion and diverge at their end portions.

For electrical connection of the plurality of conductors of the busbar ducts 11 and 12, the power distribution device 10 comprises junction means 20.

The junction means 20 comprise a plurality of pairs of conductor plates 21, 22, 23, 24. Each pair of conductor plates 21-24 defines a housing for receiving the end portions of the conductors of the first busbar duct 11 and the second busbar duct 12.

As an example, the pair of conductor plates 21, which is composed of the two conductor plates 21 a, 21b, define a seat 21c, consisting of the gap between the two conductor plates 21 a, 21 b and adapted to receive the end portion of the conductor L1 of the first busbar duct 11 and the end portion of the conductor L1 of the second busbar duct 12. Likewise, the pair of conductor plates 22-24 define respective seats 22c-24c for receiving the end portions of the conductors L2, L3, N of the first 11 and the second 12 busbar ducts.

Each conductor plate, e.g. the plate 21a, has a first end portion designed to contact the end portion of the conductor L1 of the first busbar duct 11, and an opposite second end portion designed to contact the end portion of the conductor L1 of the second busbar duct 12.

In one embodiment, a spacer member (not shown) is placed between the two conductor plates of each pair of conductor plates, and maintains the two conductor plates of each pair separated to define the seat for the conductors of the first and second busbar ducts.

The pairs of conductor plates 21-24 are mutually insulated by interposed plates of insulating material 27-29. For instance, the plate of insulating material 27 is interposed between the conductor plates 21 and 22,

For connection of the conductors G 1, G2 of the two busbar ducts 11, 12, the device 10 comprises pairs of conductor plates 25 and 26 placed on each side of the pairs of conductor plates 21 and 24 and separated from them by corresponding insulator plates 30 and 31.

It shall be noted that the outer conductor plates of the pairs of conductor plates 25 and 26, designated by numerals 32 and 33 respectively, act as closing elements of the block composed of the pairs of conductor plates and insulator plates.

The junction means 20 also include clamping means 40 for clamping and holding together the pairs of conductor plates 21-26 and insulator plates 27-31. Advantageously, these clamping means 40 act upon the pairs of conductor plates 21-26 and on the insulator plates 27-31 against an elastic load. For this purpose, elastic spacers may be provided between the conductor plates.

In one embodiment, the clamping means 40 are movable between an open state, in which they allow the end portions of the conductors of the busbar ducts 11, 12 to fit into the corresponding seats of the conductor plates 21-26 and a closed state, in which they clamp the pairs of conductor plates 21-26 to clamp said end portions of the conductors of the busbar ducts 11, 12.

In order to hold the pairs of conductor plates 21-26 together as a single block even in the open state, the clamping means 40 extend through said pairs of conductor plates 21-26 and insulator plates 27-31. Therefore, the clamping means 40 are integral with the block composed of the pairs of conductor plates and insulator plates of the joint 20.

In one embodiment, the clamping means 40 comprise a bolt, composed of a screw 41 and one or more retaining nuts 42. The screw 41 is made of a metal material, to provide a sufficient clamping force and is coated with an electrically insulating material to avoid short-circuits between the pairs of conductor plates 21-26.

For the pairs of conductor plates 21-26 to be held together, the pairs of conductor plates 21-26 and the insulator plates 27-31 have aligned holes 13 that form a passage 13a for the clamping means 40, particularly for the screw 41.

The junction means 20 also include second clamping means 50 that extend through the conductors of at least one of the conductors of the first busbar duct 11 and the conductors of the second busbar duct 12. Therefore, the second clamping means 50 set a second degree of freedom of the joint 20 which, as more clearly shown by the description of the embodiments of the invention, adds versatility to the busbar power distribution device 10 and improves its adaptability to customers' needs.

In one embodiment, the clamping means 50 comprise a bolt, composed of a screw 51 and one or more retaining nuts 52. Like in the first clamping means 40, the screw 51 is made of a metal material, to provide a sufficient clamping force and is coated with an electrically insulating material to avoid short-circuits between the pairs of conductor plates 21-26.

The end portions of the conductors through which the second clamping means 50 extend have aligned closed slots that form a passage for the second clamping means 50

It shall be noted that, as used in this specification and the claims, the term closed slot shall designate a through opening that is peripherally delimited by a closed surface.

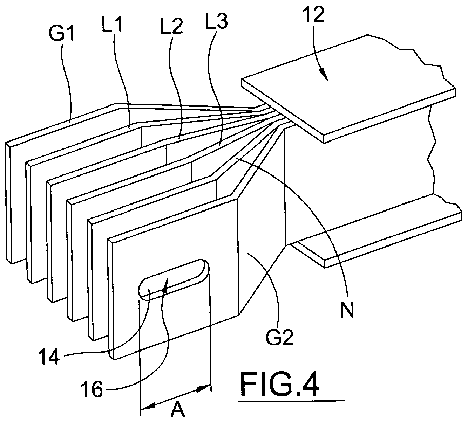

As shown in Figure 4, where reference is made without limitation to the busbar duct 12, the closed slots 14 extend through a length portion A, along the longitudinal direction X-X of the busbar duct 12. The closed slots 14 that are designed to receive the clamping screw 51, allow the busbar duct 12 to move relative to the clamping screw 51, which is integral with the joint 20 (Figures 1, 2 and 3) to adjust the distance between the end portions of the conductors of the two busbar ducts 11, 12 within a range equal to the length A of the closed slot 14.

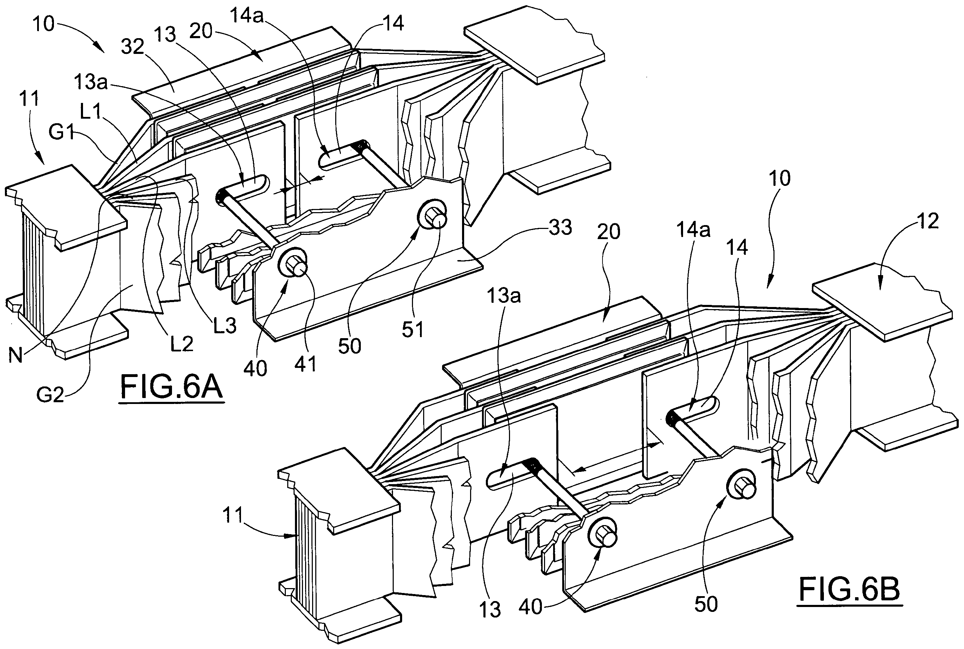

The closed slots allow adjustment of the distance between the joint and the end portions of the corresponding busbar duct having the closed slots, while avoiding any risk of separation of the joint from the busbar duct. As shown in Figures 6a and 6b, the end portions of the two busbar ducts 11, 12 have respective closed slots 13, 14, which are aligned to form corresponding passages 13a, 14a for the first and second clamping means 40, 50.

Therefore, the closed slots 13, 14 allow the conductors of the two busbar ducts 11, 12 to slide relative to the joint 20. Thus, the distance between the end portions of the conductors of the two busbar ducts 11, 12 may be adjusted in a range from a distance D1, when the conductors are in a proximal position relative to the joint 20, and a distance D2=D1+2*A, when the conductors are in a distal position relative to the joint 20. In short, the user may adjust the distance between the end portions of the conductors of the two busbar ducts 11, 12 within a range that is equal to the sum of the lengths of the two closed slots 13, 14, in this case equal to twice the length A of each slot, as slots are shown to have equal lengths.

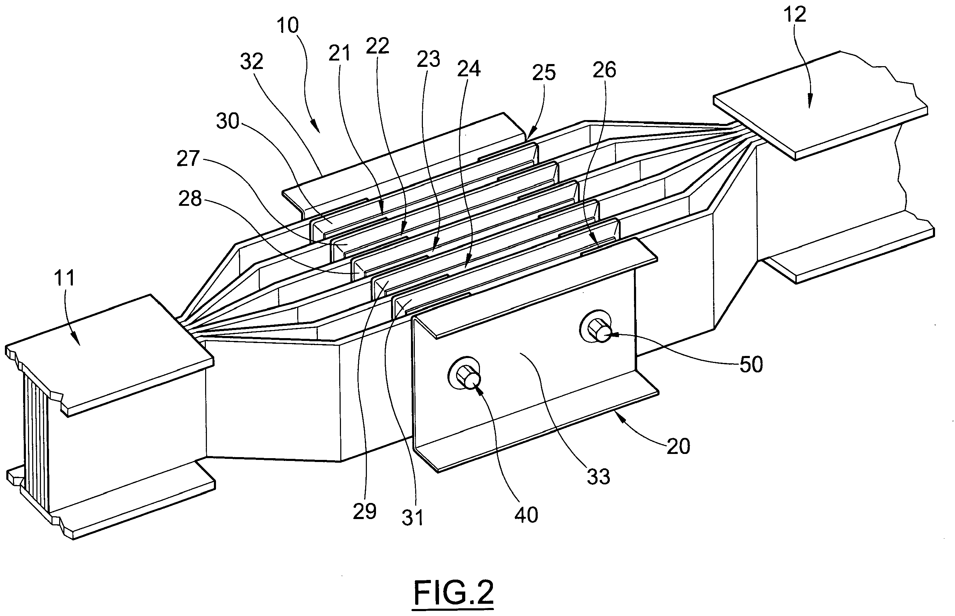

Thus, due to the presence of the closed slots 13, 14, the conductors of the two busbar ducts 11, 12 and the joint 20 are mutually movable between a proximal position (Figures 1 and 6a) and a distal position (Figures 2 and 6b) along a length equal to those of the corresponding closed slots 13, 14.

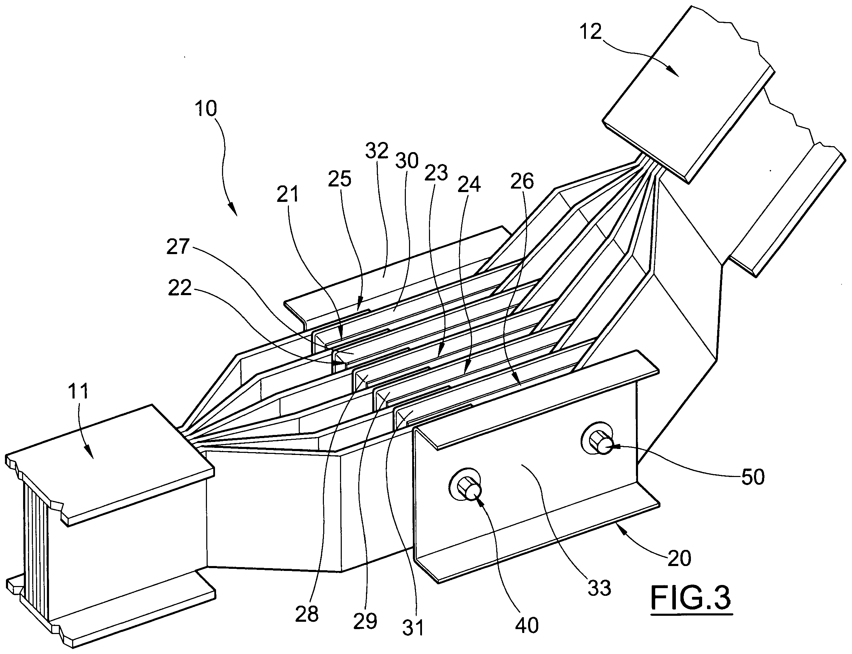

Figure 3 shows a possible application of the device of the present invention. Here, the joint 20 may be articulated with the two busbar ducts 11, 12, which may pivot about an axis of rotation identified by the clamping screws 41 and 51. This configuration may be useful, for instance, if curves and/or corners have to be formed along the busbar power distribution line.

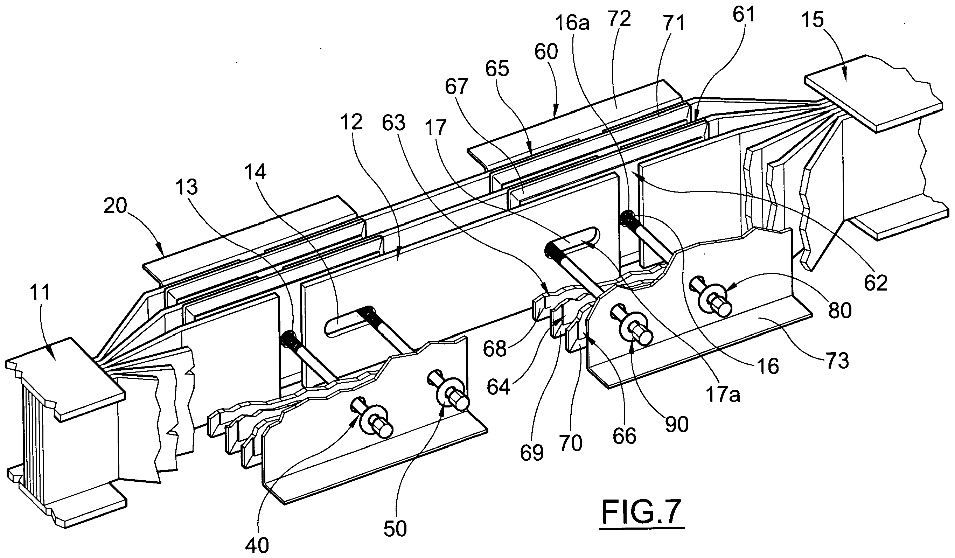

Figure 7 shows an example of a power distribution device not part of the present invention.

In this example, the second clamping means 50 extend through the conductors of the second busbar duct 12 which have a closed slot 14 for this purpose, whereas the first clamping means 40 extend through the plates of the joint 20, which have holes 13 aligned to form a passage 13a for the screw 41.

Due to the presence of the closed slot 14, the conductors of the second busbar duct 12 and the joint 20 are mutually movable between a proximal position and a distal position along a length equal to that of the closed slot 14. Thus, the user may adjust the distance between the end portions of the conductors of the two busbar ducts 11, 12 within a range equal to the length of the closed slot 14.

As also noted in Figure 7, the busbar power distribution device 10 comprises second junction means 60 for electrical connection of the second busbar duct 12 with a third busbar duct 15.

In the example as described herein, the joint 60 is identical to the joint 20 and shall not be described in detail.

It can be noted that the joint 60 comprises pairs of conductor plates 61-66 are mutually insulated by interposed plates of insulating material 67-71. Like in the joint 20, the outer plates of the pairs of conductor plates 65 and 66 are designated by numerals 72 and 73 and act as closing elements of the block composed of the pairs of conductor plates and insulator plates.

The joint 60 comprises first clamping means 80, which are configured as the first clamping means 40 of the joint 20, and second clamping means 90, configured as the second clamping means 50 of the joint 20. It shall be noted that the hole 16 and the closed slot 17 and the corresponding passages 16a, 17a for the first and second clamping means 80, 90 of the second joint 60 correspond to the hole 13 and the closed slot 14 and the corresponding passages 13a, 14a for the first and second clamping means 40, 50 of the first joint 20.

Due to the presence of the closed slot 17, the conductors of the third busbar duct 15 and the joint 60 are mutually movable between a proximal position and a distal position along a length equal to that of the closed slot 17. Thus, the user may adjust the distance between the end portions of the conductors of the two busbar ducts 12, 15 within a range equal to the length of the closed slot 17. Adjustment on the joint 60, in combination with adjustment on the joint 20, allows adjustment of the distance between the end portions of the conductors of the two busbar ducts 11, 15 within a range that is equal to the sum of the lengths of the two closed slots 14, 17, in this case equal to twice the length of each slot, as slots are shown to have equal lengths.

It shall be noted that, while the second busbar duct 12 is shown with parallel conductors, it can be configured otherwise. For example, the busbar duct 12 may be a duct with parallel conductors, diverging at the junction area with the joints 20 and 60, like the busbar ducts 11 and 15. In this case, the busbar duct 12 may be considered a connecting element between the first joint 20 and the second joint 60. The two opposed closed slots 14, 17 on the connecting element 12 between the two joints 20 and 60 allow adjustment of the distance between the end portions of the conductors of the two busbar duct 11, 15 in a range equal to the sum of the lengths of the two closed slots 14, 17.

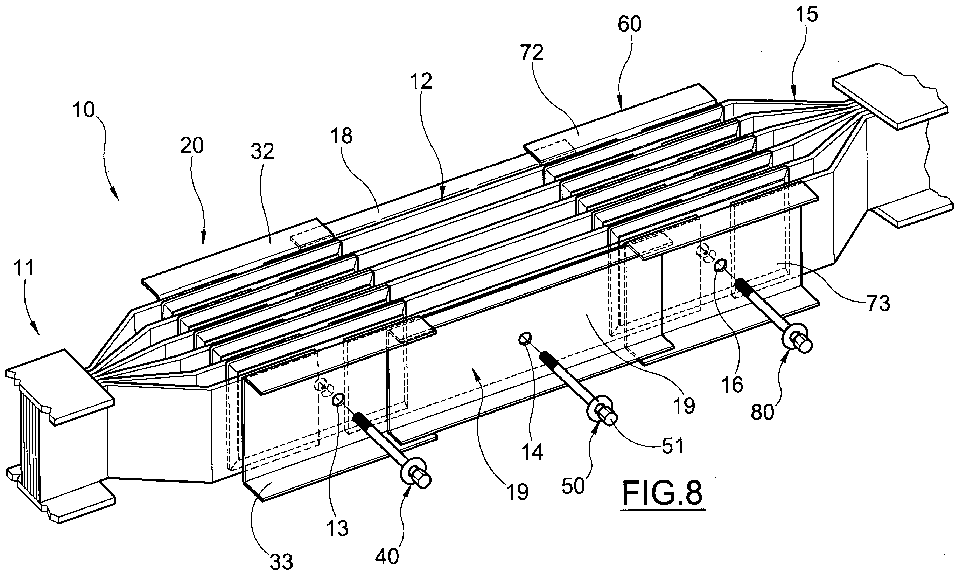

Figure 8 shows an example of a power distribution device not part of the present invention.

In this example, the clamping means 50 extend through the conductors of the second busbar duct 12 which have a hole 14 for this purpose. The conductors of the second busbar duct 12 are held together by two opposed outer conductor plates 18, 19, which both have a through hole 14 for the passage of the clamping screw 51 of the second clamping means 50.

In order to adjust the position of the second busbar duct 12 relative to the joint 20, the outer conductor plates 32, 33 of the joint 20 are shaped to guide the outer conductor plates 18, 19 of the second busbar duct 12. In one embodiment, both the outer conductor plates 32, 33 and the outer conductor plates 18, 19 have a C shape, and are thus adapted for mutual coupling and sliding.

As noted in Figure 8, the busbar power distribution device 10 comprises a second joint 60 for electrical connection of the second busbar duct 12 to a third busbar duct 15, with clamping means 80.

In the example as described herein, the joint 60 is identical to the joint 20 and shall not be described in detail.

In order to adjust the position of the third busbar duct 15 relative to the joint 60, the outer conductor plates 72, 73 of the joint 60 are shaped to guide the outer conductor plates 18, 19 of the second busbar duct 12. Both the outer conductor plates 72, 73 and the outer conductor plates 18, 19 have a C shape, and are thus adapted for mutual coupling and sliding.

Adjustment on the joint 60, in combination with adjustment on the joint 20, allows adjustment of the distance between the end portions of the conductors of the two busbar ducts 11, 15 within a range that is equal to the sum of the adjustments available on each joint 20, 60.

It shall be noted that the busbar duct 12 may be considered a connecting element between the first joint 20 and the second joint 60.

It will be appreciated from the above that the power distribution device of the present invention obviates prior art drawbacks.

Those skilled in the art will obviously appreciate that a number of changes and variants may be made to the power distribution device of the invention as described hereinbefore to meet specific needs, without departure from the scope of the invention, as defined in the following claims.

## Claims

1. A busbar power distribution device (10) comprising:
- a first busbar duct (11) having a plurality of mutually insulated conductors, extending in a prevailing longitudinal direction,
- a second busbar duct (12) having a plurality of mutually insulated conductors, extending in a prevailing longitudinal direction,
- junction means (20) for connecting the conductors of the first busbar duct (11) with the corresponding conductors of the second busbar duct (12),
wherein said junction means (20) comprise:
- a plurality of pairs of conductor plates (21-26), each pair of conductor plates defining a seat for receiving the end portions of the conductors of the first busbar duct (11) and the second busbar duct (12),
- a plurality of insulator plates (27-31) interposed between the pairs of conductor plates (21-26),
- first clamping means (40) for clamping said pairs of conductor plates (21-26) and said insulator plates (27-31) against an elastic load,
- second clamping means (50) that extend through the conductors of at least one of the conductors of the first busbar duct (11) and the conductors of the second busbar duct (12), **characterized in that**
- the end portions of the conductors of said first (11) and second (12) busbar ducts through which the first (40) and second clamping means (50) extend have aligned closed slots (13,14) that form respective passages (13a, 14a) for said first (40) and second clamping means (50),
- said closed slots (13, 14) extend along portions having a length A, in the longitudinal direction of the respective first and second busbar duct (11, 12), so that the respective first and second busbar ducts (11, 12) may slide relative to said junction means (20) to adjust the distance between the end portions of the conductors of said first (11) and second (12) busbar ducts within a range equal to the sum of the lengths A of said closed slots (13, 14)

2. A busbar power distribution device (10) as claimed in claim 1, wherein each conductor plate has a first end portion designed to contact the end portion of a conductor of the first busbar duct (11), and an opposite second end portion designed to contact the end portion of a conductor of the second busbar duct (12).

3. A busbar power distribution device (10) as claimed in claim 1 or 2, wherein said first clamping means (40) are movable between an open state, in which they allow the end portions of the conductors of the busbar ducts (11, 12) to fit into the corresponding seats of the pairs of conductor plates (21-26) and a closed state, in which they clamp the pairs of conductor plates (21-26) to clamp said end portions of the conductors of the busbar ducts (11, 12).

4. A busbar power distribution device (10) as claimed in any claim from 1 to 3, wherein said first clamping means (40) pass through said pairs of conductor plates (21-26) and said insulator plates (27-31) to be integral therewith.

## Patentansprüche

1. Sammelschienen-Energieverteilungsvorrichtung (10), umfassend:
- einen ersten Sammelschienenkanal (11) mit einer Vielzahl gegeneinander isolierter Stromleiter, die sich in einer Hauptlängsrichtung erstrecken,
- einen zweiten Sammelschienenkanal (12) mit einer Vielzahl gegeneinander isolierter Stromleiter, die sich in einer Hauptlängsrichtung erstrecken,
- Verbindungsmittel (20) zum Verbinden der Stromleiter des ersten Sammelschienenkanals (11) mit den entsprechenden Stromleitern des zweiten Sammelschienenkanals (12),
wobei die Verbindungsmittel (20) umfassen:
- eine Vielzahl von Stromleiterplattenpaaren (21 bis 26), wobei jedes Stromleiterplattenpaar eine Auflage zum Aufnehmen der Endabschnitte der Stromleiter des ersten Sammelschienenkanals (11) und des zweiten Sammelschienenkanals (12) definiert,
- eine Vielzahl von Isolatorplatten (27 bis 31), die zwischen die Stromleiterplattenpaare (21-26) geschaltet werden,
- erste Einspannmittel (40) zum Einspannen der Stromleiterplattenpaare (21 bis 26) und der Isolatorplatten (27 bis 31) gegen eine federnde Last,
- zweite Einspannmittel (50), die sich durch die Stromleiter von mindestens einem der Stromleiter des ersten Sammelschienenkanals (11) und der Stromleiter des zweiten Sammelschienenkanals (12) erstrecken,
**dadurch gekennzeichnet, dass**
- die Endabschnitte der Stromleiter der ersten (11) und zweiten (12) Sammelschienenkanäle, durch die sich die ersten (40) und zweiten Einspannmittel (50) erstrecken, ausgerichtete geschlossene Schlitze (13,14) haben, die entsprechende Durchführungen (13a, 14a) für die ersten (40) und zweiten Einspannmittel (50) bilden,
- sich die geschlossenen Schlitze (13, 14) entlang Abschnitten mit einer Länge A in der Längsrichtung des entsprechenden ersten und zweiten Sammelschienenkanals (11, 12) erstrecken, damit die entsprechenden ersten und zweiten Sammelschienenkanäle (11, 12) bezogen auf die Verbindungsmittel (20) gleiten können, um den Abstand zwischen den Endabschnitten der Stromleiter der ersten (11) und zweiten (12) Sammelschienenkanäle innerhalb eines Bereichs gleich der Summe der Längen A der geschlossenen Schlitze (13, 14) einzustellen.

2. Sammelschienen-Energieverteilungsvorrichtung (10) nach Anspruch 1, wobei jede Stromleiterplatte einen ersten Endabschnitt, der ausgelegt wird, um den Endabschnitt eines Stromleiters des ersten Sammelschienenkanals (11) zu kontaktieren, und einen gegenüberliegenden zweiten Endabschnitt hat, der ausgelegt wird, um den Endabschnitt eines Stromleiters des zweiten Sammelschienenkanals (12) zu kontaktieren.

3. Sammelschienen-Energieverteilungsvorrichtung (10) nach Anspruch 1 oder 2, wobei die ersten Einspannmittel (40) zwischen einem offenen Zustand, in dem sie den Endabschnitten der Stromleiter der Sammelschienenkanäle (11, 12) ermöglichen, in die entsprechenden Auflagen der Stromleiterplattenpaare (21 bis 26) zu passen, und einem geschlossenen Zustand beweglich sind, in dem sie die Stromleiterplattenpaare (21 bis 26) festklemmen, um die Endabschnitte der Stromleiter der Sammelschienenkanäle (11, 12) festzuklemmen.

4. Sammelschienen-Energieverteilungsvorrichtung (10) nach einem Anspruch 1 bis 3, wobei die ersten Einspannmittel (40) durch die Stromleiterplattenpaare (21 bis 26) und die Isolatorplatten (27 bis 31) verlaufen, um damit eingebaut zu sein.

## Revendications

1. Dispositif de distribution électrique à barres collectrices (10) comprenant :
- un premier conduit de barres collectrices (11) ayant une pluralité de conducteurs mutuellement isolés, s'étendant dans une direction longitudinale prédominante,
- un deuxième conduit de barres collectrices (12) ayant une pluralité de conducteurs mutuellement isolés, s'étendant dans une direction longitudinale prédominante,
- des moyens de jonction (20) pour connecter les conducteurs du premier conduit de barres collectrices (11) avec des conducteurs correspondants du deuxième conduit de barres collectrices (12),
dans lequel lesdits moyens de jonction (20) comprennent :
- une pluralité de paires de plaques conductrices (21-26), chaque paire de plaques conductrices définissant un siège pour recevoir les portions d'extrémité des conducteurs du premier conduit de barres collectrices (11) et du deuxième conduit de barres collectrices (12),
- une pluralité de plaques isolantes (27-31) interposées entre les paires de plaques conductrices (21-26),
- des premiers moyens de serrage (40) pour serrer lesdites paires de plaques conductrices (21-26) et lesdites plaques isolantes (27-31) contre une charge élastique,
- des deuxièmes moyens de serrage (50) qui s'étendent à travers les conducteurs d'au moins un des conducteurs du premier conduit de barres collectrices (11) et des conducteurs du deuxième conduit de barres collectrices (12),
**caractérisé en ce que**
- les portions d'extrémité des conducteurs desdits premier (11) et deuxième (12) conduits de barres collectrices à travers lesquels les premiers (40) et deuxièmes moyens de serrage (50) s'étendent ont des fentes fermées alignées (13, 14) qui forment des passages respectifs (13a, 14a) pour lesdits premiers (40) et deuxièmes moyens de serrage (50),
- lesdites fentes fermées (13, 14) s'étendent le long de portions ayant une longueur A, dans la direction longitudinale des premier et deuxième conduits de barres collectrices (11, 12) respectifs, de manière que les premier et deuxième conduits de barres collectrices (11, 12) respectifs puissent coulisser par rapport auxdits moyens de jonction (20) pour régler la distance entre les portions d'extrémité des conducteurs desdits premier (11) et deuxième (12) conduits de barres collectrices dans une plage égale à la somme des longueurs A desdites fentes fermées (13, 14).

2. Dispositif de distribution électrique à barres collectrices (10) selon la revendication 1, dans lequel chaque plaque conductrice a une première portion d'extrémité conçue pour venir en contact avec la portion d'extrémité d'un conducteur du premier conduit de barres collectrices (11) et une deuxième portion d'extrémité opposée conçue pour venir en contact avec la portion d'extrémité d'un conducteur du deuxième conduit de barres collectrices (12).

3. Dispositif de distribution électrique à barres collectrices (10) selon la revendication 1 ou 2, dans lequel lesdits premiers moyens de serrage (40) sont mobiles entre un état ouvert, dans lequel ils permettent aux portions d'extrémité des conducteurs des conduits de barres collectrices (11, 12) de s'ajuster dans les sièges correspondants des paires de plaques conductrices (21-26) et un état fermé, dans lequel ils serrent les paires de plaques conductrices (21-26) pour serrer lesdites portions d'extrémité des conducteurs des conduits de barres collectrices (11, 12).

4. Dispositif de distribution électrique à barres collectrices (10) selon une quelconque des revendications 1 à 3, dans lequel lesdits premiers moyens de serrage (40) passent à travers lesdites paires de plaques conductrices (21-26) et lesdites plaques isolantes (27-31) pour être solidaires avec elles.
